# EUROPEAN PATENT APPLICATION

(11) **EP 4 183 718 A1**
(43) Date of publication of application: **24.05.2023**
(21) Application number: 22208156.4
(22) Date of filing: 17.11.2022
(51) Int. Cl.: B65G 1/04, B65G 47/90, B65G 47/91, B65G 49/06, B65G 61/00

(54) **EQUIPMENT FOR THE LOGISTICS OF SLAB-SHAPED MANUFACTURED ARTICLES**

(30) Priority: 19.11.2021 IT 202100029384
(71) Applicant: LK Lab S.r.L., 41042 Fiorano Modenese (MO) (IT)
(72) Inventor: IACARUSO, Luca, 41042 Fiorano Modenese (MO) (IT)
(74) Representative: Zoli, Filippo

(57) **Abstract**

The equipment (1) for the logistics of slab-shaped manufactured articles comprises:
at least one feeding plane (2) of at least one slab-shaped manufactured article (M) and at least one outlet plane (3) of the slab-shaped manufactured article (M);
at least one robotic gripping assembly (4) of the slab-shaped manufactured article (M) provided with at least three degrees of freedom;
first movement means (5) of the gripping assembly (4) along at least a first direction of movement (A);
second movement means (7) of the gripping assembly (4) along at least a second direction of movement (B), wherein the first direction (A) and the second direction (B) are separate from each other;
a plurality of temporary storage stations (9) of the slab-shaped manufactured article (M) mutually arranged substantially aligned to define at least a first row (F1) substantially parallel to the first direction of movement (A) and at least a second row (F2) substantially parallel to the second direction of movement (B),
transfer means (10) of the gripping assembly (4) between the first movement means (5) and the second movement means (7).

## Description

### Technical Field

The present invention relates to a piece of equipment for the logistics of slab-shaped manufactured articles.

### Background Art

A slab-shaped manufactured article is a product obtained as a result of an industrial process and, specifically, is a large-sized slab.

At the end of the production process, the slab-shaped manufactured articles are generally moved so as to send them towards further machining steps, such as e.g. grinding, or towards storage areas awaiting packaging for release in the market.

During the storage phase, the slab-shaped manufactured articles are placed on appropriate frames, which can be either of the horizontal or vertical type depending on the position taken by the manufactured articles themselves, and are then moved individually or together in a block with the relevant frame.

The movement of the slab-shaped manufactured articles is generally carried out by means of appropriate equipment, such as e.g. of the suction cup type, which can be operated manually or in an automated manner.

Given the often very bulky dimensions of the slab-shaped manufactured articles, it is easy to appreciate how their movement is particularly delicate, so the farther away the storage areas are the greater the risk of breakage on the way to them.

To overcome this drawback, the slab-shaped manufactured articles are often moved together with the relevant frame.

However, this type of movement also has a high risk of breakage.

In fact, in the case of horizontal frames, the weight of the slab-shaped manufactured articles arranged one on top of the other bears down on the slab-shaped manufactured article placed lower down which, as a result of this mechanical stress, may undergo breakage or deformation. The presence of any flakes of material causes a nonlinear and uniform load distribution which can cause the relevant stack to become unbalanced and the slab-shaped manufactured articles composing it to fall, especially during the operations of movement.

In the case of vertical frames, on the other hand, the slab-shaped manufactured articles are often unstable so that the displacement of the frame itself can cause the manufactured articles themselves to tip over or fall.

It follows, therefore, that the movement of the slab-shaped manufactured articles today is particularly delicate and, in addition to posing a high risk of breakage of the slab-shaped manufactured articles themselves, requires a considerable amount of time which, as a result, reduces the yield of the production line.

The storage methods of the slab-shaped manufactured articles employed to date, in which the storage areas are often far from the production line, and the frames described above also require large working spaces.

To overcome these drawbacks, the Applicant has devised a piece of equipment for the logistics of slab-shaped manufactured articles, described in the patent document WO2020255006, which involves the use of an anthropomorphic robot movable along one direction of movement and adapted to pick up the slab-shaped manufactured articles from a feeding line and to release them onto storage stations arranged laterally to the robot itself. Depending on packaging and/or sales requirements, the robot then picks up the required manufactured articles from the storage stations and releases them onto an output line. According to a preferred embodiment of the equipment covered by patent WO2020255006, the feeding line and the output line are arranged along the line of forward movement of the robot, so as to best optimize the robot's displacements, thus limiting unnecessary movements to a minimum and, consequently, also the risk of breakage or damage.

This solution, however, also has some limitations.

In fact, the equipment covered by patent WO2020255006 involves large linear overall dimensions, along the robot's direction of movement, and therefore requires the availability of a suitable environment where to place it.

In other words, the equipment covered by patent WO2020255006 is difficult to use in those environments which have small dimensions and, in particular, which do not have available spaces extending lengthwise.

As can be easily guessed, this reduces the scope of application of the equipment covered by patent WO2020255006.

### Description of the Invention

The main aim of the present invention is to devise a piece of equipment for the logistics of slab-shaped manufactured articles that can be used without special environmental constraints, i.e., that can be used even within environments that do not have high longitudinal extensions, while allowing the slab-shaped manufactured articles to be moved smoothly and safely, so as to limit the risk of breakage or damage to the manufactured articles themselves.

Within this aim, one object of the present invention is to devise a piece of equipment for the logistics of slab-shaped manufactured articles which allows for the rapid and efficient movement of the slab-shaped manufactured articles, so as to achieve high productivity of the related plant, while minimizing the investment required for its deployment.

Another object of the present invention is to devise a piece of equipment for the logistics of slab-shaped manufactured articles which allows the aforementioned drawbacks of the prior art to be overcome within the framework of a simple, rational, easy and efficient to use as well as cost-effective solution.

The aforementioned objects are achieved by the present piece of equipment for the logistics of slab-shaped manufactured articles according to claim 1.

### Brief Description of the Drawings

Other characteristics and advantages of the present invention will become more apparent from the description of a preferred, but not exclusive, embodiment of a piece of equipment for the logistics of slab-shaped manufactured articles, illustrated by way of an indicative, yet non-limiting example, in the accompanying tables of drawings in which:
Figure 1 is a plan view from above of a piece of equipment according to the invention, in a first embodiment and in a first operational configuration;
Figure 2 is a plan view from above of the piece of equipment in Figure 1, in a second operational configuration;
Figure 3 is a plan view from above of the piece of equipment in Figure 1, in a third operational configuration;
Figure 4 is a plan view from above of the piece of equipment in Figure 1, in a fourth operational configuration;

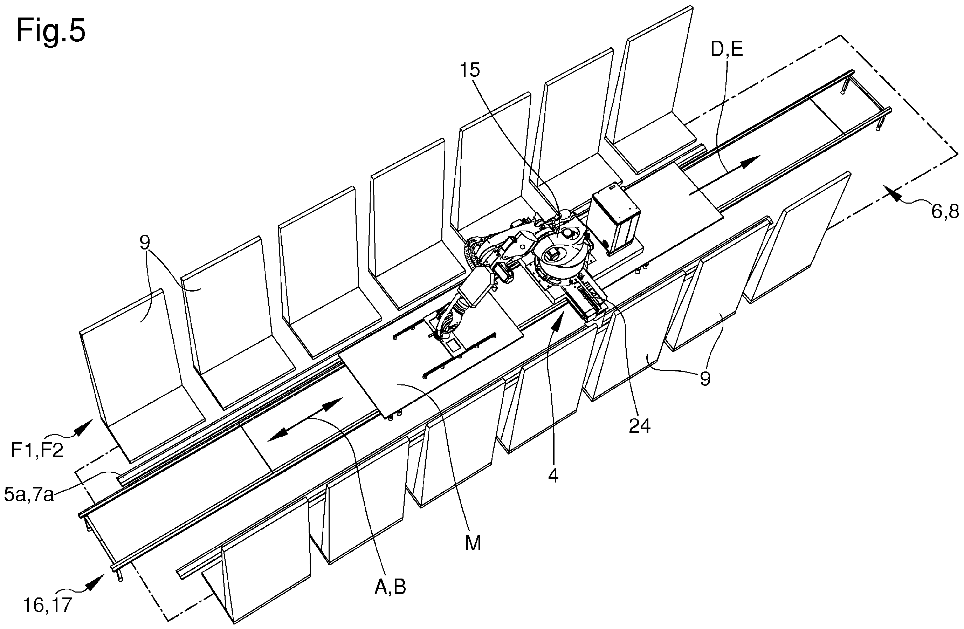

Figure 5 is an axonometric view of a portion of the piece of equipment in Figure 1;
Figure 6 is a plan view from above of a piece of equipment according to the invention, in a second embodiment and in a first operational configuration;
Figure 7 is a plan view from above of the piece of equipment in Figure 6, in a second operational configuration;
Figure 8 is a plan view from above of the piece of equipment in Figure 6, in a third operational configuration;
Figure 9 is a plan view from above of the piece of equipment in Figure 6, in a fourth operational configuration;
Figure 10 is a plan view from above of the piece of equipment in Figure 6, in a fifth operational configuration;
Figure 11 is a plan view from above of the piece of equipment in Figure 6, in a sixth operational configuration.

### Embodiments of the Invention

With particular reference to these figures, reference numeral 1 globally denotes a piece of equipment for the logistics of slab-shaped manufactured articles.

The piece of equipment 1 comprises at least one feeding plane 2 of at least one slab-shaped manufactured article M, such as e.g. of the type of a ceramic or glass slab or the like, and at least one outlet plane 3 of the slab-shaped manufactured article itself. The feeding plane 2 and the outlet plane 3 may be separate from each other or coincide with each other as required.

The feeding plane 2 and/or the outlet plane 3 can be of the fixed type, such as e.g. of the type of a table top on which the slab-shaped manufactured articles M are placed or picked up by means of appropriate lifting machines (not shown in the figures), such as e.g. forklift or pallet trucks or mechanical robots, or they can be of the movable type, such as e.g. of the type of roller conveyors or conveyor belts.

Then, the piece of equipment 1 comprises at least one robotic gripping assembly 4 of the slab-shaped manufactured article M provided with at least three degrees of freedom and at least first movement means 5 of the gripping assembly 4 along at least a first direction of movement A, so as to define at least a first working area 6 of the gripping assembly 4.

According to the invention, the piece of equipment 1 comprises second movement means 7 of the gripping assembly 4 along at least a second direction of movement B, so as to define at least a second working area 8 of the gripping assembly 4, wherein the first direction of movement A and the second direction of movement B are separate from each other. Preferably, the first direction of movement A and the second direction of movement B are substantially parallel to each other and the first movement means 5 are arranged side by side with the second movement means 7, so as to contain the longitudinal overall dimensions along the directions of movement A, B.

Preferably, the gripping assembly 4 comprises at least one anthropomorphic robot 14 and a frame 24 supporting the anthropomorphic robot 14.

More particularly, each of the movement means 5, 7 comprises at least one relevant pair of sliding guides 5a, 7a which extend parallel to the corresponding direction of movement A, B. The frame 24 of the gripping assembly 4 is associated movable sliding with the guides 5a, 7a.

The frame 24 can be of the type of an overhead crane, i.e., it has a horizontally arranged crossbar, in which case the anthropomorphic robot 14 is associated in suspension with the frame itself. In this embodiment, the guides 5a, 7a are arranged externally to the relevant working area 6,8.

In an alternative embodiment, the frame 24 defines a supporting plane of the anthropomorphic robot 14 and the guides 5a, 7a are arranged within the corresponding working area 6,8.

The gripping assembly 4 is adapted to pick up the slab-shaped manufactured article M from the feeding plane 2, to position the slab-shaped manufactured article M on one of the storage stations 9 and to pick up the slab-shaped manufactured article M from one of the storage stations 9 to release it on the outlet plane 3.

Thus, the term "working area" means the area that can be reached by the gripping assembly 4 by moving along the relevant direction of movement A, B thanks to its degrees of freedom.

Still according to the invention, the piece of equipment 1 comprises a plurality of temporary storage stations 9 of the slab-shaped manufactured article M mutually arranged substantially aligned to define at least a first row F1 substantially parallel to the first direction of movement A and arranged inside the first working area 6 and at least a second row F2 substantially parallel to the second direction of movement B and arranged inside the second working area 8. More particularly, in the embodiments shown in the figures, there are two first rows F1 arranged parallel to the first direction of movement A, from opposite sides to each other with respect to the first movement means 5, and two second rows F2 arranged parallel to the second direction of movement B, from opposite sides to each other with respect to the second movement means 7.

In more detail, the rows F1, F2 are arranged at the perimeter edge of the relevant working areas 6,8.

According to the invention, the piece of equipment 1 comprises transfer means 10 of the gripping assembly 4 between the first movement means 5 and the second movement means 7.

Appropriately, the transfer means 10 are arranged where an end stretch of the first movement means 5 and of the second movement means 7 is located.

Advantageously, the transfer means 10 comprise at least one interconnecting line 11 extending along a direction of transport C transverse with respect to the directions of movement A, B and shifting means 13 of the gripping assembly 4 adapted to allow the linear movement of the gripping assembly itself. More particularly, the shifting means 13 are substantially similar in construction to the movement means 5, 7.

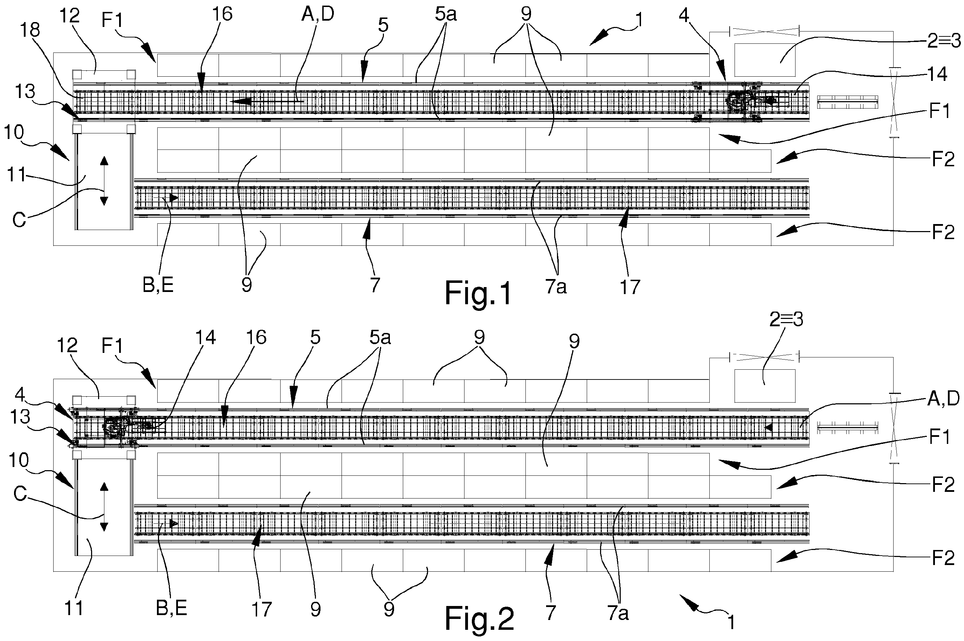

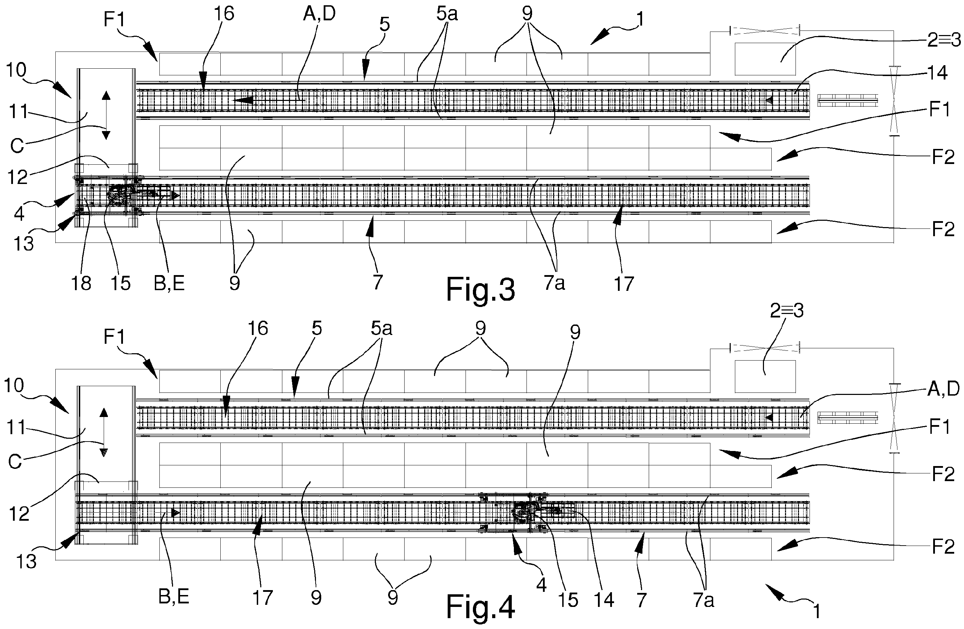

In the first embodiment shown in Figures 1 to 4, the transfer means 10 comprise at least one transport device 15 associated movable by shifting with the interconnecting line 11 along the direction of transport C and adapted to support the gripping assembly 4, and the shifting means 13 are associated with the transport device 15.

Thus, the transport device 15 is provided with shifting means 13 adapted to allow the ascent/descent of the gripping assembly 4 on/from the transport device 15.

Appropriately, as visible from the figures, the direction of transport C is arranged perpendicular to the directions of movement A, B and the shifting means 13 extend parallel to the directions of movement themselves.

More particularly, the shifting means 13 are positionable in alignment either with the first movement means 5 or with the second movement means 7 as a result of the displacement of the transport device 15 along the direction of transport C so as to allow the ascent/descent of the gripping assembly itself on/from the transport device 15.

In other words, the transport device 15 is movable between a first position, wherein the shifting means 13 are aligned with the first movement means 5, so as to allow the gripping assembly 4 to pass from one to the other, and a second position, wherein they are aligned with the second movement means 7. In this embodiment, the interconnecting line 11 thus operates as a guide for the linear sliding of the transport device 15 along the direction of transport C.

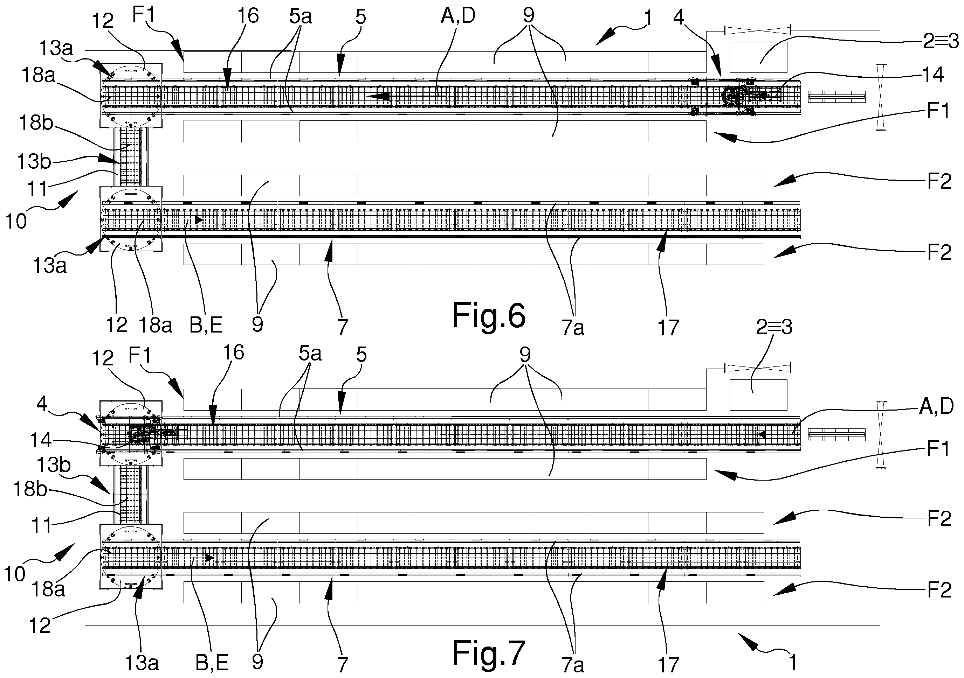

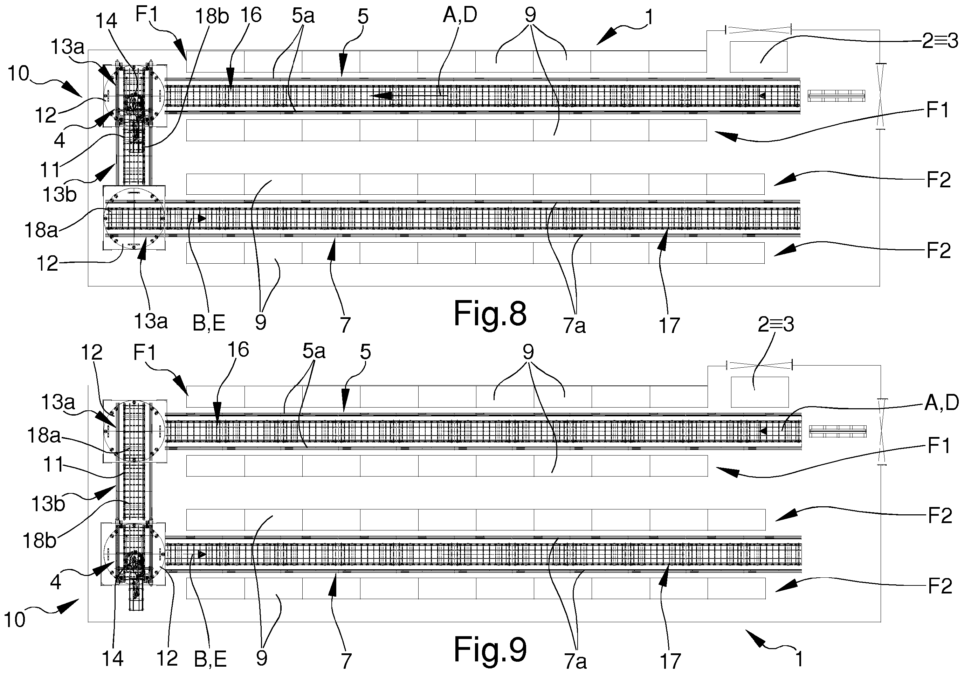

In the second embodiment shown in Figures 6 to 8, the transfer means 10 comprise at least one pair of rotational units 12 arranged at the end stretches of the movement means 5, 7 and movable in rotation around a relevant axis and the interconnecting line 11 is positioned between the rotational units 12. In this embodiment, the shifting means 13 comprise first shifting means 13a locked together in rotation with each of the rotational units 12 around the relevant axes and second shifting means 13b associated with the interconnecting line 11. More particularly, each rotational unit 12 is rotatable between at least a first position, wherein the relevant first shifting means 13a are aligned with the corresponding movement means 5,7, and a second position, wherein the first shifting means 13a are aligned with the second shifting means 13b. The first and second positions are angularly offset from each other by 90°.

Thus, in order to enable the passage of the gripping assembly 4 from the first movement means 5 to the second movement means 7, or vice versa, it is necessary that the rotational unit 12, arranged along the end stretch of the movement means 5,7 along which the gripping assembly 4 moves, is initially arranged in the first position, so as to enable the loading of the gripping assembly 4 onto the rotational unit itself. Thereafter, the same rotational unit 12 should displace to the second position, so as to allow the transfer of the gripping assembly 4 to the other rotational unit 12, along the interconnecting line 11, which will make the opposite displacement, that is, from the second position to the first position, so as to allow the passage of the gripping assembly itself towards the destination movement means 5,7.

Advantageously, the piece of equipment 1 comprises at least one line of forward movement 16,17 of the slab-shaped manufactured articles M. The line of forward movement 16,17 is movable along a direction of forward movement D,E and is, e.g., of the type of a roller conveyor, of a belt conveyor or the like. Preferably, the line of forward movement 16,17 is positioned between the guides 5a,7a.

The direction of forward movement D,E can be coincident with one of the directions of movement A,B, or it can be vertically aligned therewith but arranged at a lower height.

In addition, the feeding plane 2 and the outlet plane 3 can be separated from the line of forward movement 16,17, e.g. arranged laterally thereto, or they can be defined by the line of forward movement itself.

In more detail, the piece of equipment 1 comprises at least a first line of forward movement 16 extending along the first direction of forward movement D and a second line of forward movement 17 extending along a second direction of forward movement E.

The first direction of forward movement D and the second direction of forward movement E are parallel or coincident with the first direction of movement A and with the second direction of movement B, respectively.

Advantageously, the transfer means 10 comprise at least one transfer line 18 of the slab-shaped manufactured articles M from the first line of forward movement 16 to the second line of forward movement 17 and vice versa.

The transfer line 18 has the same conformation, in terms of construction, as the lines of forward movement 16, 17.

More specifically, in the embodiment shown in Figures 1 to 4, the transfer line 18 is associated with the transport device 15. In other words, the transfer line 18 is locked together with the transport device 15 in its displacements along the direction of transport C. In this embodiment, the transport device 15 supports, therefore, a pair of guides defining the shifting means 13 and a conveyor belt or belts of forward movement defining the transfer line 18.

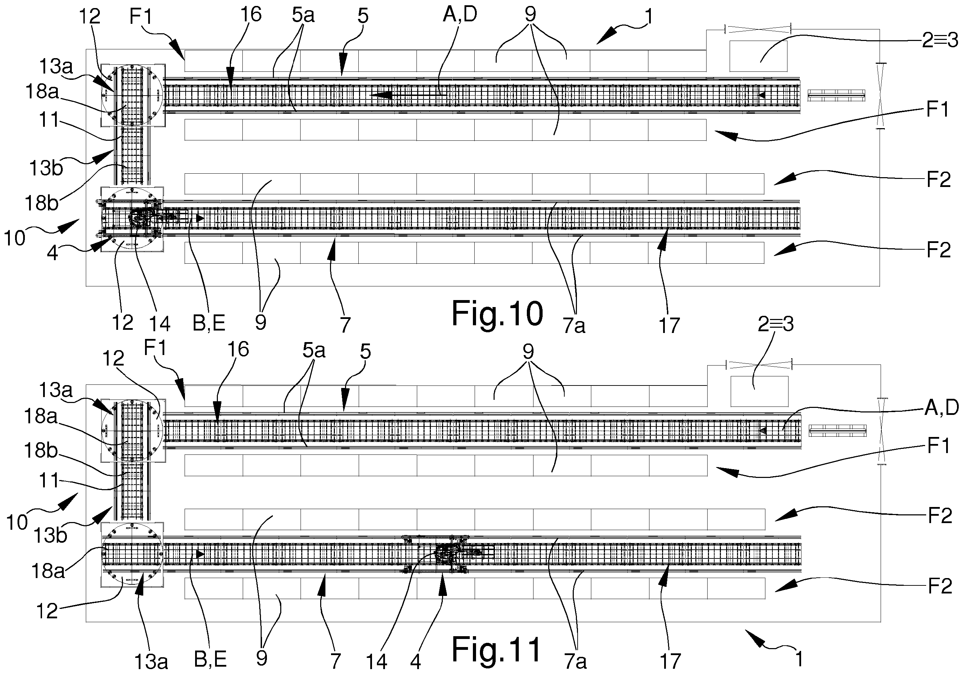

In the second embodiment shown in Figures 6 to 11, however, the transfer line 18 comprises at least one pair of first stretches 18a locked together in rotation with the rotational units 12 and at least a second stretch 18b associated with said interconnecting line 11. Similarly to what has been described for the first shifting means 13a, each of the first stretches 18a is also movable between a first position, wherein they are aligned with the corresponding line of forward movement 16, 17, and a second position, wherein they are aligned with the second stretch 18b. Again, the first and second positions are angularly offset from each other by 90°.

The operation of the piece of equipment according to the invention is as follows.

The slab-shaped manufactured articles M to be stored are placed on the feeding plane 2 where one of the movement means 5,7 is located, and are picked up by the gripping assembly 4 by means of its movement along the relevant direction of movement A,B and the degrees of freedom with which it is provided.

The gripping assembly 4 then carries out the placement of the slab-shaped manufactured article M on the relevant storage stations 9. The storage stations 9 on which the slab-shaped manufactured articles M are placed can be allocated depending on the type of slab-shaped manufactured articles themselves. Depending on the pre-allocated storage stations 9 on which the slab-shaped manufactured article M is to be released from time to time, the gripping assembly 4 can either move along the movement means 5,7 on which it is located or displace on the adjacent movement means 5,7 by means of the transfer means 10.

More particularly, in the first embodiment shown in Figures 1 to 4, the gripping assembly 4 can be moved from one movement means 5,7 to the other by means of the transport device 15. Thus, the transport device 15 initially arranges itself so that the relevant shifting means 13 are aligned with the movement means 5,7 on which the gripping assembly 4 is located, so as to allow the passage thereof over the transport device itself, after which it moves on the interconnecting line 11, along the direction of transport C, until it is aligned with the other movement means 5,7. In this way, the gripping assembly 4 can get off the transport device 15 and move along the other movement means 5,7 so as to reach the storage stations 9 arranged along them.

In the second embodiment shown in Figures 6 to 11, the transfer of the gripping assembly 4 from one movement means 5,7 to the other is done by means of the rotational units 12. In more detail, the rotational unit 12 arranged where is the end stretch of the movement means 5,7 along which the gripping assembly 4 is located, arranges itself in the first position, so as to align the relevant first shifting means 13a with the movement means themselves and, after the gripping assembly 4 has climbed onto the rotational unit 12, the latter rotates around the relevant axis arranging itself in the second position. At this point, the first shifting means 13a are aligned with the second shifting means 13b and the gripping assembly 4 can move along them until it reaches the other rotational unit 12, which is also arranged in the relevant second position. This rotational unit 12 finally rotates around its own axis so as to reach the first position, thus aligning with the relevant movement means 5,7 and allowing the gripping assembly 4 to move along them reaching the corresponding storage stations 9.

At the time when there is the need to send the slab-shaped manufactured articles M to the outlet plane 3, the gripping assembly 4 substantially carries out the opposite steps to those described above, i.e., it picks up the slab-shaped manufactured articles M from the relevant storage stations 9 and moves along the movement means 5,7, possibly passing from one to the other by means of the transfer means 10, until reaching the outlet plane 3.

The gripping assembly 4 can move "on call" that is, storing and picking up the slab-shaped manufactured articles M as needed from time to time, or it can be used "in shifts", that is, it can be dedicated to the storage of the slab-shaped manufactured articles M for an entire work shift and be dedicated to picking up and unloading the slab-shaped manufactured articles M in the next work shift.

It has, in practice, been ascertained that the described invention achieves the intended objects and, in particular, the fact is emphasized that the piece of equipment covered by the present invention allows for easy and practical handling of the slab-shaped manufactured articles while limiting the overall longitudinal dimensions.

In particular, the presence of the transfer means makes it possible to use even a single robotic gripping assembly and to move it between a plurality of lines arranged parallel to each other, thus maintaining the advantages related to the use of the gripping assembly while reducing both the longitudinal extension of the plant and the overall investment.

## Claims

1. Equipment (1) for the logistics of slab-shaped manufactured articles comprising:
- at least one feeding plane (2) of at least one slab-shaped manufactured article (M) and at least one outlet plane (3) of said slab-shaped manufactured article (M);
- at least one robotic gripping assembly (4) of said slab-shaped manufactured article (M) provided with at least three degrees of freedom;
- first movement means (5) of said gripping assembly (4) along at least a first direction of movement (A), so as to define at least a first working area (6) of said gripping assembly (4);
**characterized by** the fact that it comprises:
second movement means (7) of said gripping assembly (4) along at least a second direction of movement (B), so as to define at least a second working area (8) of said gripping assembly (4), wherein said first direction (A) and said second direction (B) are separate from each other;
a plurality of temporary storage stations (9) of said slab-shaped manufactured article (M) mutually arranged substantially aligned to define at least a first row (F1) substantially parallel to said first direction of movement (A) and arranged inside said first working area (6) and at least a second row (F2) substantially parallel to said second direction of movement (B) and arranged inside said second working area (8), wherein said gripping assembly (4) is adapted to pick up the slab-shaped manufactured article (M) from said feeding plane (2), to position the slab-shaped manufactured article (M) on one of said storage stations (9) and to pick up the slab-shaped manufactured article (M) from one of said storage stations (9) to release it on said outlet plane (3);
transfer means (10) of said gripping assembly (4) between said first movement means (5) and said second movement means (7).

2. Equipment according to claim 1, **characterized by** the fact that said first direction of movement (A) is arranged substantially parallel to said second direction of movement (B).

3. Equipment according to claim 1 or 2, **characterized by** the fact that said transfer means (10) are arranged at an end stretch of said first movement means (5) and of said second movement means (7).

4. Equipment (1) according to claim 3, **characterized by** the fact that said transfer means (10) comprise at least one interconnecting line (11), which extends along a direction of transport (C) transverse with respect to said directions of movement (A, B), and shifting means (13) of said gripping assembly (4).

5. Equipment (1) according to one or more of the preceding claims, **characterized by** the fact that said transfer means (10) comprise at least one transport device (15) associated movable by shifting with said interconnecting line (11) along said direction of transport (C) and adapted to support said gripping assembly (4), and by the fact that said shifting means (13) are associated with said transport device (15).

6. Equipment (1) according to claim 5, **characterized by** the fact that said shifting means (13) are positionable in alignment with said first movement means (5) or with said second movement means (7) by effect of the displacement of said transport device (15) along said direction of transport (C) to allow the ascent/descent of the gripping assembly itself on/from said transport device (15).

7. Equipment (1) according to claim 2 and claim 5 or 6, **characterized by** the fact that said direction of transport (C) is arranged perpendicular to said directions of movement (A, B) and by the fact that said shifting means (13) extend parallel to said directions of movement (A, B).

8. Equipment (1) according to one or more of claims 1 to 4, **characterized by** the fact that said transfer means (10) comprise at least one pair of rotational units (12) arranged at the end stretches of said movement means (5, 7) and movable in rotation around a relevant axis, and by the fact that said interconnecting line (11) is positioned between said rotational units (12), said shifting means (13) comprising first shifting means (13a) locked together in rotation with said rotational units (12) and second shifting means (13b) associated with said interconnecting line (11), wherein each of said rotational units (12) is movable between a first position wherein the relevant first shifting means (13a) are aligned with the corresponding movement means (5, 7), and a second position, wherein the relevant first shifting means (13a) are aligned with said interconnecting line (11).

9. Equipment (1) according to one or more of the preceding claims, **characterized by** the fact that it comprises at least one line of forward movement (16, 17) of said slab-shaped manufactured articles (M).

10. Equipment (1) according to claim 9, **characterized by** the fact that it comprises at least one first line of forward movement (16) extending along a first direction of forward movement (D) substantially parallel to said first direction of movement (A) and at least one second line of forward movement (17) extending along a second direction of forward movement (E) substantially parallel to said second direction of movement (B), and by the fact that said transfer means (10) comprise at least one transfer line (18) of said slab-shaped manufactured articles (M) from the first line of forward movement (16) to the second line of forward movement (17) and vice versa.

11. Equipment (1) according to claim 10 and one or more of claims 5 to 7, **characterized by** the fact that said transfer line (18) is associated with said transport device (15).

12. Equipment (1) according to claim 10 and claim 8, **characterized by** the fact that said transfer line (18) comprises at least one pair of first stretches (18a) locked together with said rotational units (12) and at least a second stretch (18b) associated with said interconnecting line (11), said first stretches (18a) being movable in rotation between a first position, wherein they are aligned with a relevant line of forward movement (16, 17), and a second position, wherein they are aligned with said second stretch (18b).
